# EUROPEAN PATENT SPECIFICATION

(11) **EP 3 468 872 B1**
(45) Date of publication and mention of the grant of the patent: **06.04.2022**
(21) Application number: 17732236.9
(22) Date of filing: 08.06.2017
(51) Int. Cl.: B64D 13/00, B64D 13/06

(54) **DUCT AND METHOD FOR DIRECTING A FLOW OF AIR FROM AN AIR-COOLED DEVICE ONBOARD AN AIRCRAFT**
KANAL UND VERFAHREN ZUR STEUERUNG EINES LUFTSTROMS AUS EINER LUFTGEKÜHLTEN VORRICHTUNG AN BORD EINES FLUGZEUGS
CONDUIT ET PROCÉDÉ POUR DIRIGER UN ÉCOULEMENT D'AIR EN PROVENANCE D'UN DISPOSITIF REFROIDI PAR AIR À BORD D'UN AVION

(30) Priority: 14.06.2016 US 201662349706 P
(43) Date of publication of application: 17.04.2019
(73) Proprietor: Bombardier Inc., Dorval, Québec H4S 1Y9 (CA); Short Brothers Plc, Belfast BT3 9DZ (GB); Airbus Canada Limited Partnership, Mirabel, QC J7N 3C6 (CA)
(72) Inventor: WANG, Hongzhi, Saint-Laurent, Québec H4R 0H7 (CA)
(74) Representative: den Braber, Gérard Paul
(86) International application number: PCT/IB2017/053393
(87) International publication number: WO 2017/216689

(56) References cited:
- WO-A2-2011/018381
- DE-C1- 10 119 433
- US-A1- 2004 160 092
- US-A1- 2006 180 388

## Description

### TECHNICAL FIELD

The disclosure relates generally to air-cooled devices onboard aircraft, and more particularly to directing a flow of air from an air-cooled device onboard an aircraft.

### BACKGROUND

Aircraft commonly have equipment bays containing devices associated with various aircraft systems. Such devices may include avionics, hydraulic pumps, electric motors, etc. Some devices contained in aircraft equipment bays may be air- cooled and may require active convection cooling using a flow of air used to extract heat from the device and carry the heat away from the device.

In some situations, it may be desirable to discharge the heat-carrying air off-board the aircraft to prevent overheating of devices in the equipment bay. During flight of the aircraft however, the high-speed free stream of air flowing against the skin of the aircraft can cause some resistance to a flow of air being discharged off-board the aircraft through the skin of the aircraft via a duct. In order to overcome such resistance, one existing solution includes the use of relatively large, heavy and powerful ventilation equipment onboard the aircraft. Another existing solution includes the use of a forward lip (protrusion) disposed on the fuselage skin upstream of an outlet of the duct or of a recessed region formed in the fuselage skin for the outlet of the duct in order to reduce an external back pressure acting on the flow of air discharged off-board the aircraft. Even though the forward lip or the recessed outlet can facilitate the flow of air being discharged off-board the aircraft, they each entail a drag penalty for the aircraft.

Document WO 2011/018381 describes an aircraft which comprises an outer aerodynamic surface and an exhaust duct having an opening in the outer aerodynamic surface. The duct has a duct wall curved at the opening so as to blend with the aerodynamic surface downstream of the duct. At least one fixed flow diverter is provided for diverting high temperature exhaust gas exiting the duct away from the aerodynamic surface immediately downstream of the duct opening. The curved duct wall provides low aerodynamic drag in cruise. The flow diverter(s) give aircraft designers freedom in terms of where the duct opening can be positioned without compromising the structural integrity of the aircraft through excessive heating of the aerodynamic surface immediately downstream of the duct opening. Document DE10119433 describes an air channel, for aircraft air-conditioning unit, having an exit channel divided into an exit channel for fan chamber and a bypass channel.

### SUMMARY

In one aspect as defined in claim 1, which is appended to the description, there is provided an aircraft comprising a duct for directing a flow of air carrying heat extracted from an air-cooled device onboard the aircraft. The duct comprises:
an inlet configured to receive the flow of air;
an exhaust outlet configured to discharge some of the air received at the inlet to an exterior of the aircraft and configured such that a free stream of air flowing against a skin of the aircraft provides a flow resistance at the exhaust outlet; and
an orifice formed by a hole in a side wall of the duct, the orifice being disposed upstream of the exhaust outlet and configured to discharge some of the air received at the inlet to an interior of the aircraft, both the exhaust outlet and the orifice being simultaneously in fluid communication with the inlet to passively change a proportion of air being discharged through the exhaust outlet and through the orifice based on the flow resistance at the exhaust outlet provided by the free stream of air flowing against the skin of the aircraft.

The orifice may be disposed closer to the exhaust outlet than to the inlet.

The orifice may be disposed on a substantially straight portion of the duct.

The duct may have a curved center line and the orifice may be disposed on a concave side of the duct.

The duct may be configured to be installed so that a portion of the duct adjacent the exhaust outlet is non-normal to the skin of the aircraft.

The duct may comprise a plurality of orifices configured to discharge some of the air received at the inlet to the interior of the aircraft.

The inlet may comprise a shroud configured to adapt to an end of an electric motor.

The aircraft may comprise an equipment bay that comprises:
an aperture formed in a fuselage of the aircraft for permitting ambient air from an exterior of the aircraft to enter the equipment bay;
the air-cooled device; and
the duct for directing the flow of exhaust air carrying heat extracted from the device.

The air-cooled device may comprise an integrated fan for driving the flow of exhaust air.

In a further aspect as defined in claim 10, there is provided a method for directing a flow of air from an air-cooled device onboard an aircraft. The method comprises:
directing the air away from the device by means of a duct having:
   an inlet configured to receive the flow of air carrying heat extracted from the device;
   an exhaust outlet configured to discharge some of the air received at the inlet to an exterior of the aircraft and configured such that a free stream of air flowing against a skin of the aircraft provides a flow resistance at the exhaust outlet; and
   an orifice formed by a hole in a side wall of the duct, the orifice being disposed upstream of the exhaust outlet, both the exhaust outlet and the orifice being simultaneously in fluid communication with the inlet; and
discharging the air directed away from the device by means of the duct to at least one of an exterior of the aircraft and to an interior of the aircraft where a proportion of the air discharged to the exterior of the aircraft and to the interior of the aircraft is passively changed based on the flow resistance at the exhaust outlet provided by the free stream of air flowing against the skin of the aircraft.

The method may comprise directing the air toward the exterior of the aircraft at least partially along a linear path and discharging the air to the interior of the aircraft in a direction transverse to the linear path.

The method may comprise discharging the air to the exterior of the aircraft substantially along the linear path.

The method may comprise directing the air toward the exterior of the aircraft at least partially along a curved path and discharging the air to the interior of the aircraft at a concave location of the curved path.

Further details of these and other aspects of the subject matter of this application will be apparent from the drawings and detailed description included below.

### DESCRIPTION OF THE DRAWINGS

Reference is now made to the accompanying drawings, in which:
FIG. 1 is a perspective view of an exemplary aircraft comprising an equipment bay for containing one or more air-cooled devices;
FIG. 2 is a schematic representation of an exemplary equipment bay of the aircraft of FIG. 1 ;
FIG. 3 is a perspective view of a portion of an exemplary duct of the equipment bay of FIG. 2;
FIG. 4 is a schematic representation of the portion of the duct of FIG. 3;
FIG. 5A is an illustration of streamlines indicative of respective amounts of exhaust air being discharged via an exhaust outlet and an orifice of the duct of FIG. 3 when the aircraft is stationary;
FIG. 5B is an illustration of streamlines indicative of respective amounts of exhaust air being discharged via the exhaust outlet and the orifice of the duct of FIG. 3 when the aircraft is taking off;
FIG. 5C is an illustration of streamlines indicative of respective amounts of exhaust air being discharged via the exhaust outlet and the orifice of the duct of FIG. 3 when the aircraft is in flight;
FIG. 6 is a schematic view of a portion of another exemplary duct of the equipment bay of FIG. 2; and
FIG. 7 is a flowchart illustrating a method for directing air from an air-cooled device onboard the aircraft.

### DETAILED DESCRIPTION

This disclosure relates generally to directing a flow of air from air-cooled devices onboard an aircraft. For example, ducts and methods disclosed herein may be used to direct the flow of air carrying heat extracted from one or more devices onboard the aircraft and to discharge the air to one or both of an exterior of the aircraft and an interior of the aircraft depending on the operating condition of the aircraft. For example, in some embodiments of the disclosed ducts and methods, the proportion of air being discharged to the exterior and interior of the aircraft may be automatically and passively changed based on an operating condition of the aircraft. In some embodiments, the ducts disclosed herein may discharge more of the air to the exterior of the aircraft when the aircraft is stationary or the airspeed of the aircraft is relatively low, and, discharge more of the air to the interior of the aircraft when the airspeed of the aircraft is relatively high.

In some embodiments, the use of ducts and methods disclosed herein may reduce the need for relatively large, heavy and overly powerful ventilation equipment required to overcome the resistance offered by the high-speed free stream of air flowing against the outside of the skin of the aircraft. Accordingly, in some embodiments, ducts and methods disclosed herein may provide a relatively simple and low-weight solution for directing air from air-cooled devices onboard aircraft.

In some embodiments, the use of ducts and methods disclosed herein may entail lower drag penalties compared to those associated with a forward lip disposed on the fuselage skin upstream of an outlet of an exhaust duct or with a recessed region formed in the fuselage skin for the outlet of the exhaust duct. The use of ducts and methods disclosed herein may, in some embodiments, further reduce drag by reducing an amount of air entering and exiting an aircraft during a cruise phase of flight of the aircraft. For example, instead of discharging 100% of an air flow directed away from an air-cooled device and off-board the aircraft, the ducts and methods disclosed herein may allow for some or most of the flow of air to be re-ingested during cruise instead of being discharged off-board the aircraft. Such drag reduction can contribute toward improved fuel efficiency and range of an aircraft

Aspects of various embodiments are described through reference to the drawings.

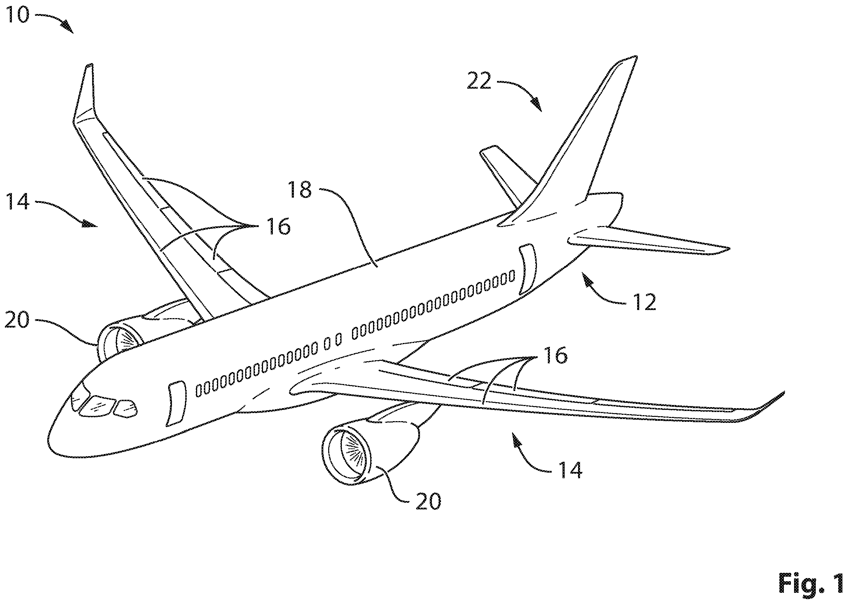

FIG. 1 is a perspective view of an exemplary aircraft 10 which may comprise an equipment bay generally shown at 12 as described below. Aircraft 10 may be any type of aircraft such as corporate (e.g., business jet), private, commercial and passenger aircraft. For example, aircraft 10 may be a narrow-body, twin-engine jet airliner. Aircraft 10 may be a fixed-wing aircraft. Aircraft 10 may comprise wings 14 including flight control surfaces 16, fuselage 18, engines 20 and empennage 22 of known or other type. One or more of engines 20 may be mounted to one or more of wings 14. Alternatively, or in addition, one or more of engines 20 may be mounted to fuselage 18 or be installed on aircraft 10 in any suitable manner.

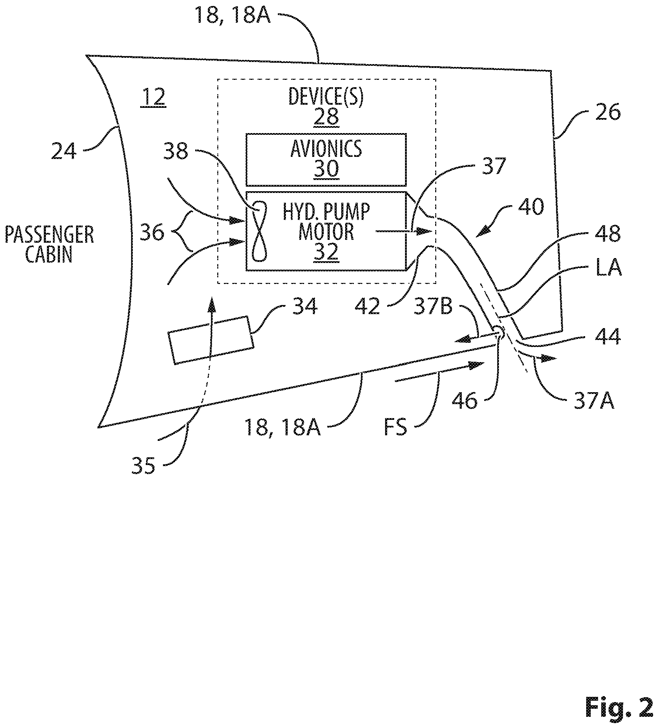

FIG. 2 is a schematic representation of an exemplary equipment bay 12 of aircraft 10. The particular equipment bay 12 illustrated in FIG. 2 is an aft equipment bay 12 disposed aft of a passenger cabin of aircraft 10. However, aspects of this disclosure may be equally applicable to air-cooled equipment located in other non- pressurized portions of aircraft 10. In some embodiments, equipment bay 12 may define a volume within a non-pressurized portion of aircraft 10. For example, equipment bay 12 may be defined in part by a forward pressure bulkhead 24 separating the pressurized passenger cabin from equipment bay 12. Equipment bay 12 may be further defined by aft bulkhead 26 and fuselage 18. Equipment bay 12 may, for example, also comprise any suitable non-pressurized zone within fuselage 18 such as a wing-to-body fairing and an avionics bay.

Equipment bay 12 may contain device(s) 28 associated with one or more systems of aircraft 10 that may be suitable for operation in a non-pressurized environment. For example, such devices 28 may include one or more avionic components 30, one or more electric motors 32, one or more hydraulic pumps and/or other devices. One or more devices 28 contained in equipment bay 12 may require cooling during at least one phase of operation of aircraft 10. For example, one or more of such devices 28 may require cooling air to be induced (i.e., active cooling) to flow past device(s) 28 to extract heat from device(s) 28 by way of convection and carry the heat away from device(s) 28 in order to keep such device(s) 28 within an acceptable temperature range. The exemplary and non-limiting device 28 requiring air cooling shown in FIG. 2 is electric motor 32 which may be coupled to drive a hydraulic pump associated with a hydraulic system of aircraft 10. However, it is understood that aspects of the present disclosure could be used in cooling other types of devices 28. It is also understood that aspects of the present disclosure could be used in cooling a plurality of devices 28 simultaneously.

In various embodiments, equipment bay 12 may comprise one or more apertures 34 (referred hereinafter in the singular) formed in fuselage 18 of aircraft 10 for permitting ambient air 35 from the exterior of aircraft 10 to freely enter equipment bay 12 and be used for cooling one or more devices 28 (e.g., electric motor 32 and avionic component 30). For example, aperture 34 may be defined by a grill, an inlet flush with skin 18A, or, a ram air inlet through which ambient air 35 may enter equipment bay 12. Electric motor 32 may comprise an integrated axial fan 38 or other type of fan(s) for producing the flow of cooling air 36 passing through electric motor 32. Alternatively, one or more non-integrated fans or blowers may be used to produce one or more flows of cooling air 36 over and/or through electric motor 32 and/or other device(s) 28 within equipment bay 12 to promote convection cooling. Equipment bay 12 may comprise duct 40 for directing a flow of exhaust air 37 (i.e., cooling air 36 carrying heat extracted from electric motor 32) away from electric motor 32. Exhaust air 37 may have a higher temperature than cooling air 36 and such higher temperature may depend on an amount of heat extracted from electric motor 32.

With respect to cooling electric motor 32, the flow of cooling air 36 may be induced (e.g., by integrated fan 38) to pass through (e.g., along an axial direction of) electric motor 32 to extract heat from electrical windings and/or bearings of electric motor 32, for example. Accordingly, duct 40 may comprise inlet 42 configured to receive the flow of exhaust air 37 downstream of electric motor 32 where the flow of exhaust air 37 may be carrying heat extracted from electric motor 32. In some embodiments, inlet 42 may comprise a shroud configured to adapt to an axial end of electric motor 32 so as to channel (e.g., funnel) the flow of exhaust air 37 into duct 40.

Duct 40 may be configured to direct the flow of exhaust air 37 away from electric motor 32 and discharge the flow of exhaust air 37 to one or both of the exterior of aircraft 10 and the interior of equipment bay 12 depending on an operating condition of aircraft 10. For example, duct 40 may comprise exhaust outlet 44 configured to discharge some of the exhaust air 37 received at inlet 42 to an exterior of aircraft 10 by discharging some of the exhaust air 37 through skin 18A of fuselage 18. The portion of exhaust air 37 discharged to the exterior of aircraft 10 is labeled using reference numeral 37A in FIG. 2. Duct 40 may also comprise orifice 46 disposed upstream of exhaust outlet 44 and configured to discharge some of the exhaust air 37 received at inlet 42 to an interior of equipment bay 12 (i.e. an interior of aircraft 10). The portion of exhaust air 37 discharged to the interior of aircraft 10 is labeled using reference numeral 37B in FIG. 2. Orifice 46 may reduce an overall downstream flow resistance to fan 38 and thereby increase the amount of air flow produced by fan 38 during one or more operating conditions of aircraft 10.

Both exhaust outlet 44 and orifice 46 may be simultaneously in fluid communication with inlet 42 during operation. For example, no valve and associated control system may be used to selectively open or occlude either inlet 42 or exhaust outlet 44 during operation. For example, both exhaust outlet 44 and orifice 46 may be permanently in fluid communication with inlet 42 during operation. As explained below, the presence of both exhaust outlet 44 and orifice 46 and the absence of any valve(s) controlling the flow through exhaust outlet 44 and orifice 46 may permit a proportion of exhaust air 37 being discharged through exhaust outlet 44 and through orifice 46 to be automatically and passively changed based on an operating condition of aircraft 10. In other words, the operation of duct 40 may be considered self-adaptive. For example, the proportion of exhaust air 37 being discharged through exhaust outlet 44 and through orifice 46 may be passively self-regulated based on an operating condition (e.g., airspeed) of aircraft 10. In some embodiments, such passive self-regulation of the flow proportion may be achieved without any moving parts.

During operation of aircraft 10, the velocity of the free stream of air FS flowing against skin 18A of aircraft 10 may vary based on the airspeed of aircraft 10. For example, when aircraft 10 is stationary or taxiing on the ground, the velocity of the free stream of air FS against skin 18A may be relatively low. Under such operating condition of aircraft 10, there may be little to no resistance for the flow of exhaust air 37 to flow out of exhaust outlet 44 and to the exterior of aircraft 10. Accordingly, under such condition, most of the exhaust air 37 may be discharged to the exterior of aircraft 10 due to the configuration of duct 40. In some embodiments, duct 40 may comprise a substantially straight (i.e., linear) portion 48 that is disposed immediately upstream of exhaust outlet 44. In some embodiments, orifice 46 may be disposed closer to exhaust outlet 44 than to inlet 42. It is understood that orifice 46 could be positioned at other suitable locations along duct 40 where, due to the momentum of exhaust air 37 flowing inside duct 40, the flow of exhaust air 37 would tend to flow mainly out of exhaust outlet 44 unless resistance offered by the free stream FS of air would cause the momentum of exhaust air 37 to be disrupted (e.g., by causing back pressure) and cause more of the exhaust air 37 to exit via orifice 46. In some embodiments, orifice 46 may be disposed proximal to an inside surface of fuselage 18 inside of equipment bay 12. The location of orifice 46 may be selected considering the expected temperature of exhaust air 37 to avoid local overheating of other device(s) 28 or other structure(s) within equipment bay 12. Orifice 46 is a hole formed in a side wall of duct 40 within substantially straight portion 48 or at any other suitable location along duct 40. In various embodiments, duct 40 may have a circular or non-circular cross-sectional profile (e.g., rectangular, elliptical). In various embodiments, duct 40 or one or more portions thereof may have a cross-sectional profile that is constant or variable along its center line. Similarly, orifice 46 may have a circular or non-circular cross-sectional profile (e.g., rectangular, elliptical).

In some embodiments, orifice 46 may be substantially transverse to longitudinal axis LA of the substantially straight portion 48 of duct 40. Accordingly, in the situation where the resistance to the flow of exhaust air 37 out of exhaust outlet 44 is relatively low, most of the exhaust air 37 may flow past orifice 46 and out of exhaust outlet 44 instead of out of orifice 46 due in part to the momentum of the flow of exhaust air 37 in the substantially straight portion 48 being substantially along longitudinal axis LA and thereby reducing the likelihood for the exhaust air 37 to be diverted out of orifice 46. In this situation and in relation to FIG. 2, a mass flow rate of stream 37A of exhaust air 37 out of exhaust outlet 44 may be greater than a mass flow rate of stream 37B of exhaust air 37 out of orifice 46.

When aircraft 10 is on the ground and is either stationary or is moving at a relatively low speed, the cooling load for electric motor 32 and potentially of other device(s) 28 may be higher because of higher outside temperatures (i.e., higher temperature of cooling air 36), high solar load and a lower convection cooling rate with the ambient environment. The need for discharging exhaust air 37 to the exterior of aircraft 10 may be more important under such operating condition to prevent over heating of device(s) 28 within equipment bay 12. The use of duct 40 may be appropriate under such condition since the free stream of air FS may not offer much resistance to the flow of exhaust air 37 out of exhaust outlet 44.

On the other hand, when aircraft 10 is in flight (e.g., during a cruise phase of flight), the velocity of the free stream of air FS flowing against skin 18A of aircraft 10 may be relatively high. The relatively fast-moving free stream of air FS against skin 18A may form a barrier (i.e., a curtain of air) offering resistance (e.g., back pressure) to the flow of exhaust air 37A through exhaust outlet 44. Under such condition, orifice 46 may provide a suitable alternate path of least resistance for the flow of exhaust air 37 despite the transverse orientation of orifice 46 relative to a general flow direction of exhaust air 37 within duct 40. This may require the momentum of the flow of exhaust air 37 to be disrupted in order for the flow of exhaust air 37B to undergo a change in direction for exiting orifice 46. Nevertheless, in the situation where the resistance to the flow of exhaust air 37A out of exhaust outlet 44 is relatively high, most of the exhaust air 37 may be discharged out of orifice 46 instead of out of exhaust outlet 44. In this situation and in relation to FIG. 2, a mass flow rate of stream 37B of exhaust air 37 out of orifice 46 may be higher than a mass flow rate of stream 37A of exhaust air 37 out of exhaust outlet 44. Therefore, instead of requiring more powerful equipment to overcome the resistance from the free stream of air FS, the configuration of orifice 46 may provide an alternate flow path for the flow of exhaust air 37 without imposing excessive resistance on fan 38. Orifice 46 may be calibrated to offer a desired resistance to the flow of exhaust air 37 therethrough while still providing a suitable alternate path for a sufficient amount of exhaust air 37 based on the cooling requirements of electric motor 32.

When aircraft 10 is in flight and moving at a higher speed, the cooling load for electric motor 32 and other device(s) 28 within equipment bay 12 may be lower because of: (1 ) lower outside air temperatures (OAT) at higher altitudes and hence a higher convection cooling rate with the ambient environment inside of equipment bay 12; and, (2) a higher heat transfer coefficient with the outside air because of the higher speed of the outside air (i.e., free stream FS of air). Under such operating condition, the need for discharging exhaust air 37 to the exterior of aircraft 10 may be less important and the discharge of some of exhaust air 37 into equipment bay 12 via orifice 46 may not cause overheating of equipment bay 12.

In some situations, the heating of equipment bay 12 provided by exhaust air 37 being discharged via orifice 46 may be beneficial by making the environment inside of equipment bay 12 warmer and more equipment-friendly at higher altitudes and/or in colder climates.

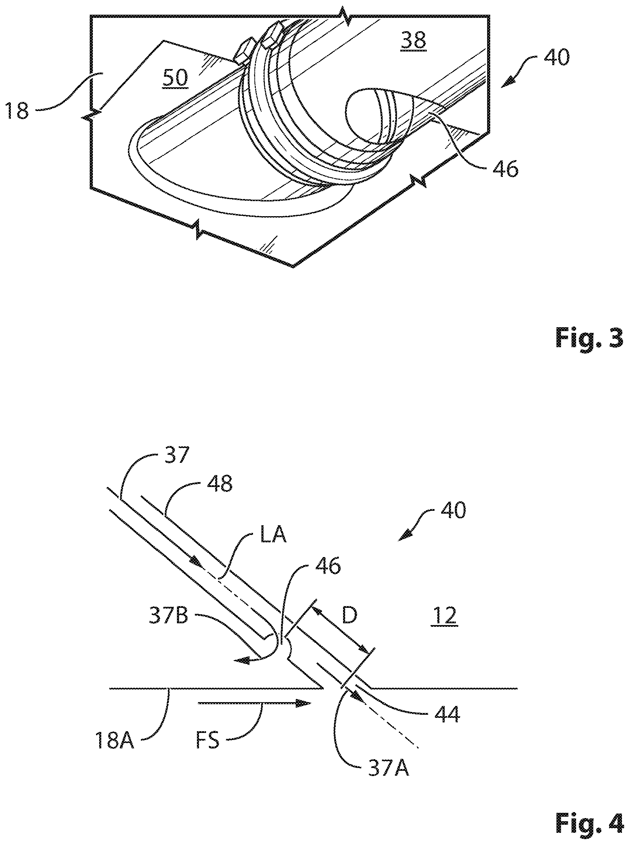

FIG. 3 is a perspective view of a portion of duct 40 of equipment bay 12 of aircraft 10. The portion of duct 40 shown is viewed from the inside of equipment bay 12 and is the portion that is interfacing with fuselage 18 in order to discharge exhaust air 37 through skin 18A and to the exterior of aircraft 10. As shown in FIG. 3, duct 40 may comprise a suitable adaptor 50 for interfacing duct 40 with fuselage 18.

FIG. 4 is a schematic representation of the portion of duct 40 shown in FIG. 3 showing the path taken by exhaust air 37A, 37B being discharged via exhaust outlet 44 and orifice 46 respectively. The size (e.g., area) and position (e.g., distance D) of orifice 46 may be selected so that an adequate flow rate of exhaust air 37 may be permitted to be discharged from duct 40 to provide adequate cooling capacity for electric motor 32 in different operating conditions (e.g., airspeed) of aircraft 10. For example, the size and position of orifice 46 may be selected so that orifice 46 does not permit too much exhaust air 37 to be re-ingested into the interior of aircraft 10 during ground operation so as to cause overheating of equipment bay 12. The size and position of orifice 46 may be selected to avoid local overheating within equipment bay 12 by exhaust air 37, which may have a relatively high temperature.

The adequate size and position of orifice 46 may be determined empirically and/or by numerical modeling according to known or other thermodynamic, pneumatic and computational fluid dynamic modeling methods based on cooling requirements for electric motor 32 and the expected environmental conditions. In some embodiments, orifice 46 may define a flow passage area that is about half the size of a flow passage area defined by the substantially straight portion 48 of duct 40. In some embodiments, duct 40 may comprise a plurality of orifices 46, which collectively may be sized and positioned to allow for a desired amount of exhaust air 37 to be re-ingested into equipment bay 12 at the appropriate time(s) and location(s).

As shown in FIG. 4, longitudinal axis LA of the substantially straight portion 48 of duct 40 may be non-normal to skin 18A of aircraft 10. For example, the substantially straight portion 48 of duct 40 may be inclined relative to skin 18A so that the flow of exhaust air 37A discharged via exhaust outlet 44 is partially directed in the same direction as the free stream of air FS flowing against skin 18A. For example, exhaust air 37A may have a component of its velocity vector in the same general direction as the free stream of air FS so as to reduce flow resistance and facilitate the flow of exhaust air 37A out of exhaust outlet 44. The inclination of the portion of duct 40 immediately upstream of exhaust outlet 44 may also reduce a drag penalty associated with discharging exhaust air 37A to the exterior of aircraft 10. In some embodiments, a suitable inclination angle between longitudinal axis LA and skin 18A may be about 45 degrees.

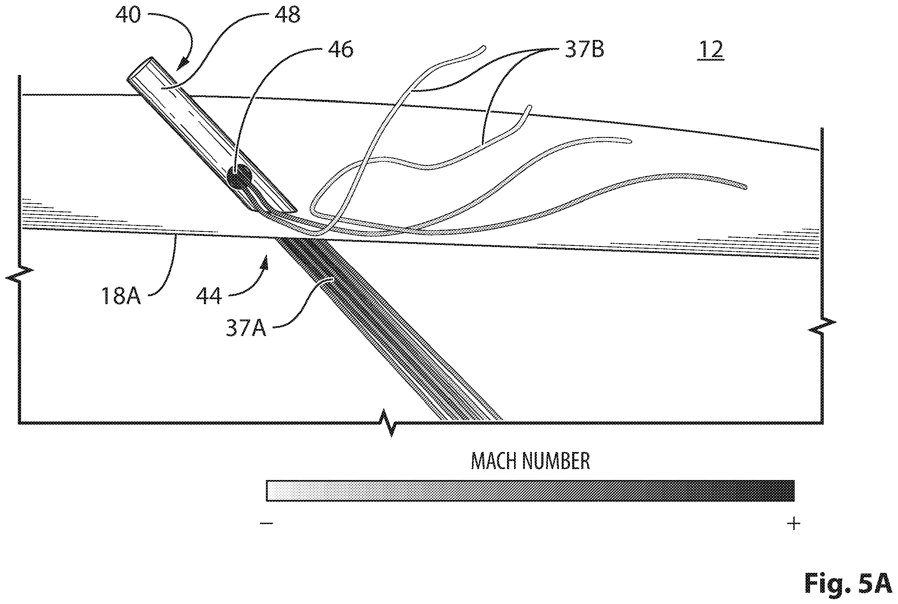

FIG. 5A is an illustration of streamlines computed using Computational Fluid Dynamics (CFD) software and indicative of respective amounts of exhaust air 37 being discharged via exhaust outlet 44 and via orifice 46 in a condition where aircraft 10 is stationary (e.g., on the ground). In this operating condition of aircraft 10, since there is little resistance to the flow of exhaust air 37 out of exhaust outlet 44, the streamlines indicate that most of exhaust air 37 is discharged via exhaust outlet 44 instead of orifice 46. In some embodiments a proportion of exhaust air 37 being re-ingested into equipment bay 12 via orifice 46 when aircraft 10 is stationary may, for example, be less than about 10%. In some embodiments, the proportion of exhaust air 37 being re- ingested into equipment bay 12 when aircraft 10 is stationary may, for example, be about 8%.

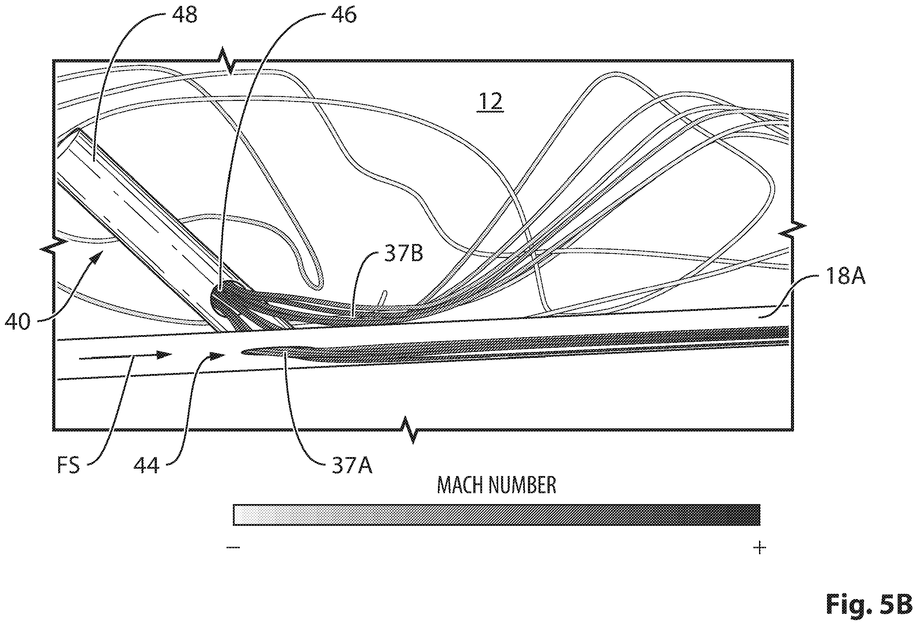

FIG. 5B is an illustration of streamlines computed using CFD software and indicative of respective amounts of exhaust air 37 being discharged via exhaust outlet 44 and via orifice 46 in a condition where aircraft 1 0 is moving at a moderate speed (e.g., during take-off). In this operating condition of aircraft 10, since there is moderate resistance to the flow of exhaust air 37 out of exhaust outlet 44, the streamlines indicate that more of exhaust air 37 is discharged via orifice 46 in comparison with the situation illustrated in FIG. 5A. In some embodiments a proportion of exhaust air 37 being re-ingested into equipment bay 12 via orifice 46 during take-off may, for example, be about 46%.

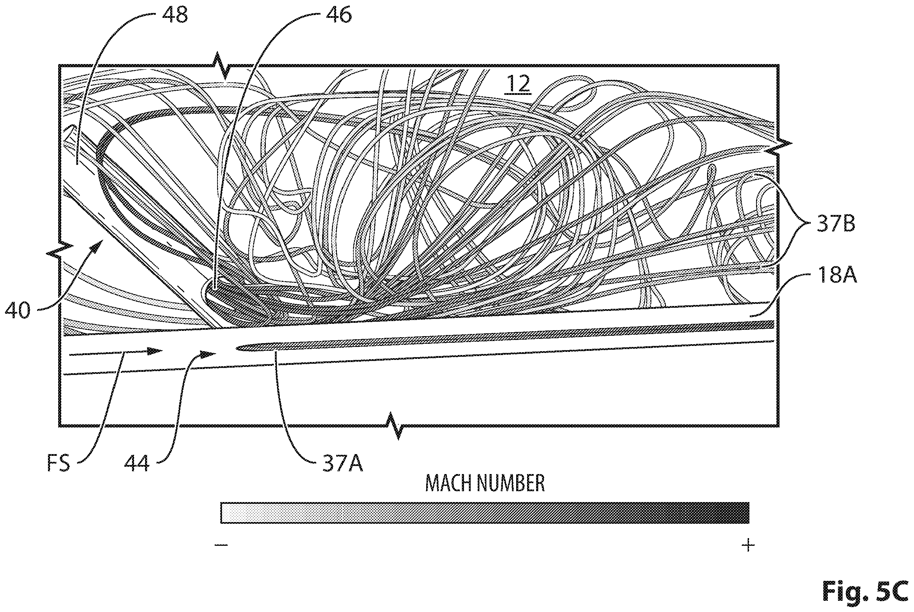

FIG. 5C is an illustration of streamlines computed using CFD software and indicative of respective amounts of exhaust air 37 being discharged via exhaust outlet 44 and via orifice 46 in a condition where aircraft 10 is moving at a relatively high speed (e.g., during cruise). In this operating condition of aircraft 10, since there is relatively high resistance to the flow of exhaust air 37 out of exhaust outlet 44, the streamlines indicate that more of exhaust air 37 is discharged via orifice 46 than via exhaust outlet 44. In some embodiments a proportion of exhaust air 37 being re-ingested into equipment bay 12 via orifice 46 during cruise may, for example, be greater than about 80%. In some embodiments, the proportion of exhaust air 37 being re- ingested into equipment bay 12 during cruise may, for example, be about 86%.

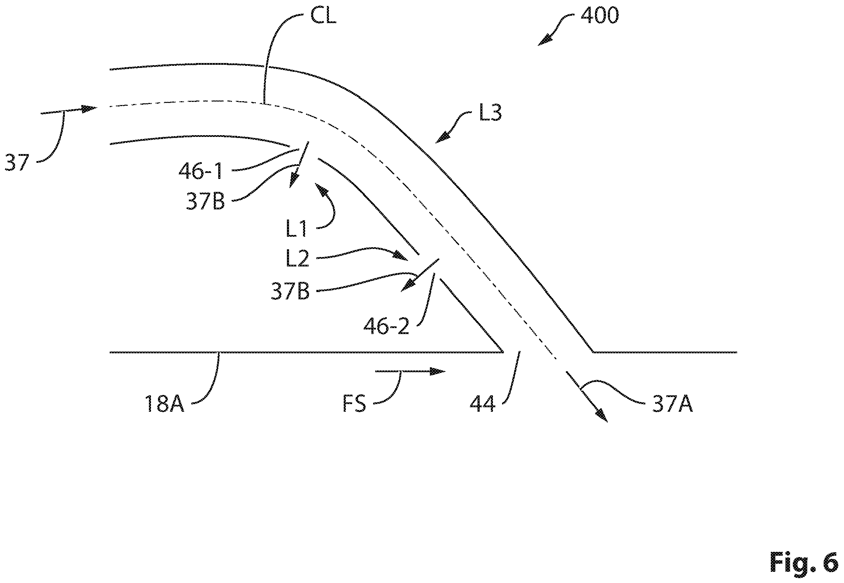

FIG. 6 is a schematic view of a portion of an exemplary duct 400 of equipment bay 12 according to another embodiment. Elements of duct 400 described above in relation to duct 40 are labeled using like reference characters.

As mentioned above, duct 400 may be curved as illustrated by center line CL and one or more orifices 46 may be disposed at different locations on duct 400. For example, one orifice 46-1 may be disposed at location L1 and another orifice 46-2 may be disposed at location L2. Orifices 46-1 and 46-2 may collectively allow some of exhaust air 37 to be discharged in the interior of aircraft 10. It is understood that several orifices 46 could be disposed on duct 400 to discharge exhaust air 37 at different locations and potentially at different rates in equipment bay 12 to avoid local overheating inside equipment bay 12. It is understood that, in some embodiments, several smaller orifices 46 may have a lesser impact on the structural integrity of duct 400 in comparison with one or more larger orifices 46.

Orifice(s) 46 may be disposed at locations requiring exhaust air 37 to undergo a change in direction from the general flow direction (e.g., along center line CL) of exhaust air 37 within duct 400. In other words, locations L1 and L2 may be locations where some disruption to the momentum of the flow of exhaust air 37 flowing along center line CL is required in order for some of exhaust air 37 to be redirected through orifices 46-1 and 46-2 respectively. The magnitude of the disruption to the flow momentum of exhaust air 37 and hence the flow rate of exhaust air 37 through orifice(s) 46 may be a function of the magnitude of flow resistance provided by the free stream FS of air at exhaust outlet 44. Accordingly, the size(s) and position(s) of orifice(s) 46 may be selected to provide automated and passive control of the flow rate of exhaust air 37 being re-ingested into equipment bay 12 via orifice(s) 46 based at least partly on the flow resistance provided by the free stream FS of air at exhaust outlet 44 of duct 400. On a curved portion of duct 400 for example, it may be desirable to have orifice 46-1 be positioned on a concave side of duct 400 as indicated by reference character L1 as opposed to a convex side of duct 400 as indicated by reference character L3.

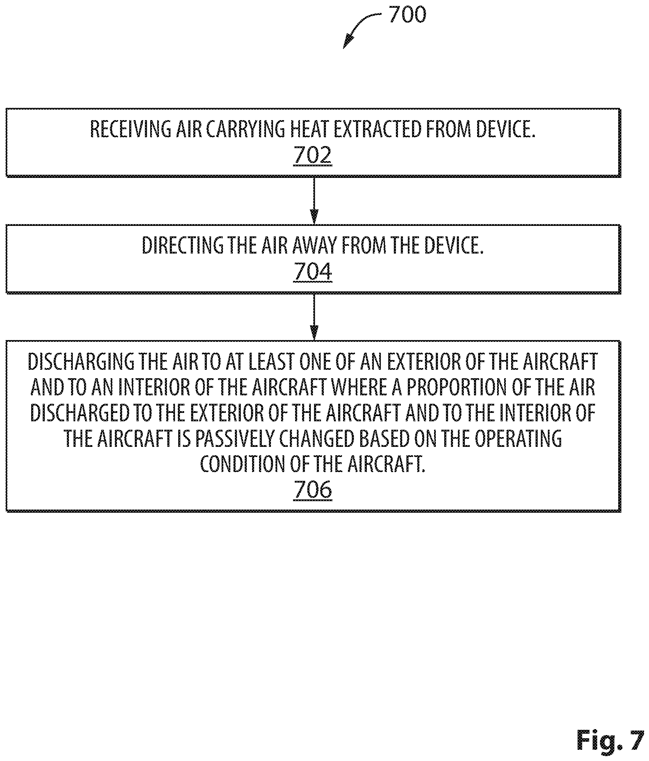

FIG. 7 is a flowchart illustrating a method 700 for directing the flow of exhaust air 37 used to cool device 28 (e.g., electric motor 32) onboard aircraft 10. In some embodiments, method 700 may be conducted using ducts 40 (see FIG. 4) or 400 (see FIG. 6) in equipment bay 12 as described above. Accordingly, aspects of ducts 40, 400 and equipment bay 12 described above may also apply to method 700 and vice versa. In various embodiments, method 700 may comprise: receiving exhaust air 37 carrying heat extracted from one or more devices 28 (see block 702); directing exhaust air 37 away from device 28 (see block 704); and discharging exhaust air 37 to at least one of an exterior of aircraft 10 and to an interior of aircraft 10 where a proportion of exhaust air 37 discharged to the exterior of aircraft 10 and to the interior of aircraft 10 is passively changed based on an operating condition of aircraft 10 (see block 706).

In some embodiments, method 700 may comprise directing the flow of exhaust air 37 toward the exterior of aircraft 10 at least partially along a linear path (e.g., see longitudinal axis LA in FIG. 4) and discharging exhaust air 37B to the interior of aircraft 10 in a direction transverse to the linear path. In some embodiments, method 700 may comprise discharging exhaust air 37A to the exterior of aircraft 10 substantially along the linear path. In some embodiments, the linear path may be non-normal to skin 18A of aircraft 10 as shown in FIG. 4.

In some embodiments, method 700 may comprise directing the flow of exhaust air 37 toward the exterior of aircraft 10 at least partially along a curved path (e.g., see center line CL in FIG. 6) and discharging the exhaust air 37B to the interior of aircraft 10 at a concave location L1 (see FIG. 6) of curved path CL.

In some embodiments, method 700 may comprise discharging exhaust air 37B to the interior of aircraft 10 at a plurality of locations L1, L2 as shown in FIG. 6.

In some embodiments, method 700 may comprise discharging more exhaust air 37 to the interior of aircraft 10 as the operating condition (e.g., airspeed) of aircraft 10 causes an increase in resistance (e.g., back pressure) to exhaust air 37 being discharged to the exterior of aircraft 10.

In some embodiments, method 700 may comprise discharging more exhaust air 37 to the interior of aircraft 10 than to the exterior of aircraft 10 when aircraft 10 is in flight or has a relatively high airspeed.

In some embodiments, method 700 may comprise discharging more exhaust air 37 to the exterior of aircraft 10 than to the interior of aircraft 10 when aircraft 10 is stationary or has a relatively low airspeed.

In some embodiments of method 700, the operating condition of aircraft10 may comprise an airspeed of aircraft 10.

The above description is meant to be exemplary only, and one skilled in the relevant arts will recognize that changes may be made to the embodiments described without departing from the scope of the invention as claimed. For example, the blocks and/or operations in the flowcharts and drawings described herein are for purposes of example only. There may be many variations to these blocks and/or operations without departing from the teachings of the present disclosure. The present disclosure may be embodied in other specific forms without departing from the subject matter of the claims. Also, one skilled in the relevant arts will appreciate that while the duct and equipment bay disclosed and shown herein may comprise a specific number of elements/components, the duct and, equipment bay and method could be modified to include additional or fewer of such elements/components. Also, the scope of the claims should not be limited by the preferred embodiments set forth in the examples, but should be given the broadest interpretation consistent with the description as a whole.

## Claims

1. An aircraft (10) comprising a duct (40) for directing a flow of air (37) carrying heat extracted from an air-cooled device (32) onboard the aircraft, the duct comprising:
an inlet (42) configured to receive the flow of air;
an exhaust outlet (44) configured to discharge some of the air received at the inlet to an exterior of the aircraft and configured such that a free stream of air (FS) flowing against a skin (18A) of the aircraft provides a flow resistance at the exhaust outlet; and
an orifice (46) formed by a hole in a side wall of the duct, the orifice being disposed upstream of the exhaust outlet and configured to discharge some of the air received at the inlet to an interior of the aircraft, both the exhaust outlet and the orifice being simultaneously in fluid communication with the inlet to passively change a proportion of air being discharged through the exhaust outlet and through the orifice based on the flow resistance at the exhaust outlet provided by the free stream of air flowing against the skin of the aircraft.

2. An aircraft as defined in claim 1, wherein the orifice (46) is disposed closer to the exhaust outlet (44) than to the inlet (42).

3. An aircraft as defined in any one of claims 1 and 2, wherein the orifice (46) is disposed on a substantially straight portion (48) of the duct.

4. An aircraft as defined in any one of claims 1 and 2, wherein the duct has a curved center line and the orifice (46) is disposed on a concave side of the duct.

5. An aircraft as defined in any one of claims 1 to 4, wherein the duct is configured to be installed so that a portion of the duct adjacent the exhaust outlet (44) is non-normal to the skin (18A) of the aircraft (10).

6. An aircraft as defined in any one of claims 1 to 5, the duct comprising a plurality of orifices (46) configured to discharge some of the air received at the inlet (42) to the interior of the aircraft (10).

7. An aircraft as defined in any one of claims 1 to 6, wherein the inlet (42) comprises a shroud configured to adapt to an end of an electric motor (32).

8. An aircraft as defined in any one of claims 1 to 7 comprising an equipment bay (12)), the equipment bay comprising:
an aperture (34) formed in a fuselage (18) of the aircraft for permitting ambient air from an exterior of the aircraft to enter the equipment bay;
the air-cooled device (32); and
the duct (40) for directing the flow of air (37) carrying heat extracted from the air-cooled device (32).

9. An aircraft as defined in claim 8, wherein the air- cooled device (32) comprises an integrated fan (38) for driving the flow of exhaust air.

10. A method for directing a flow of air from an air-cooled device (32) onboard an aircraft (10), the method comprising:
directing the air away from the device by means of a duct having:
an inlet (42) configured to receive the flow of air carrying heat extracted from the device;
an exhaust outlet (44) configured to discharge some of the air received at the inlet to an exterior of the aircraft and configured such that a free stream of air (FS) flowing against a skin (18A) of the aircraft provides a flow resistance at the exhaust outlet; and
an orifice (46) formed by a hole in a side wall of the duct, the orifice being disposed upstream of the exhaust outlet, both the exhaust outlet and the orifice being simultaneously in fluid communication with the inlet; and
discharging the air directed away from the device by means of the duct to at least one of an exterior of the aircraft and to an interior of the aircraft where a proportion of the air discharged to the exterior of the aircraft and to the interior of the aircraft is passively changed based on the flow resistance at the exhaust outlet provided by the free stream of air (FS) flowing against the skin (18A) of the aircraft.

11. A method as defined in claim 10, comprising directing the air toward the exterior of the aircraft (10) at least partially along a linear path and discharging the air to the interior of the aircraft in a direction transverse to the linear path.

12. A method as defined in claim 11, comprising discharging the air to the exterior of the aircraft substantially along the linear path.

13. A method as defined in any of claims 10 to 12 comprising directing the air toward the exterior of the aircraft (10) at least partially along a curved path and discharging the air to the interior of the aircraft at a concave location of the curved path.

## Patentansprüche

1. Flugzeug (10), ein Rohr (40) zum Leiten eines Luftstroms (37) umfassend, der die Wärme transportiert, die von einer luftgekühlten Vorrichtung (32) an Bord des Flugzeuges abgeführt wird, wobei das Rohr umfasst:
eine Einströmöffnung (42), die so konfiguriert ist, dass sie den Luftstrom aufnimmt;
eine Ausströmöffnung (44), die so konfiguriert ist, dass sie Einiges von der Einströmöffnung empfangenen Luft zur Außenseite des Flugzeuges abgibt, und die so konfiguriert ist, dass ein freier Luftstrom (FS), der gegen eine Haut (18A) des Flugzeuges strömt, einen Strömungswiderstand an der Ausströmöffnung erzeugt; und
eine Öffnung (46), die durch ein Loch in einer Seitenwand des Rohres gebildet wird, wobei die Öffnung oberhalb der Ausströmöffnung angeordnet und so konfiguriert ist, dass sie einen Teil der an der Einströmöffnung empfangenen Luft in das Innere des Flugzeugs abgibt, wobei sowohl die Ausströmöffnung als auch die Öffnung gleichzeitig in flüssige Kommunikation mit der Einströmöffnung stehen, um einen Anteil der durch die Ausströmöffnung und durch die Öffnung abgegebenen Luft auf Basis des Strömungswiderstandes an der Ausströmöffnung, die durch den gegen die Haut des Flugzeugs strömenden freien Luftstrom bereitgestellt wird, passiv auszuwechseln.

2. Flugzeug, nach Anspruch 1, wobei die Öffnung (46) näher an der Ausströmöffnung (44) als an der Einströmöffnung (42) angeordnet ist.

3. Flugzeug, nach einem der Ansprüche 1 und 2, wobei die Öffnung (46) an einem im Wesentlichen geraden Abschnitt (48) des Rohres angeordnet ist.

4. Flugzeug, nach einem der Ansprüche 1 und 2, wobei das Rohr eine gekrümmte Mittellinie aufweist und die Öffnung (46) auf einer konkaven Seite des Rohres angeordnet ist.

5. Flugzeug, nach einem der Ansprüche 1 bis 4, wobei das Rohr konfiguriert ist, um so installiert zu sein, dass ein Teil des Rohres neben der Ausströmöffnung (44) nicht gleichmäßig zur Außenhaut (18A) des Flugzeugs (10) verläuft.

6. Flugzeug, nach einem der Ansprüche 1 bis 5, wobei das Rohr eine Vielzahl von Öffnungen (46) umfasst, die so konfiguriert sind, dass sie Einiges von der an der Einströmöffnung (42) empfangenen Luft in das Innere des Flugzeugs (10) abgeben.

7. Flugzeug, nach einem der Ansprüche 1 bis 6, wobei die Einströmöffnung (42) eine Abdeckung umfasst, die so gestaltet ist, dass sie an ein Ende eines Elektromotors (32) angepasst werden kann.

8. Flugzeug, nach einem der Ansprüche 1 bis 7, einen Ausrüstungsschacht (12) umfassend, wobei der Ausrüstungsschacht umfasst:
eine Durchlassöffnung (34), die in einem Rumpf (18) des Flugzeuges ausgebildet ist, damit Umgebungsluft von einer Außenseite des Flugzeuges in den Ausrüstungsschacht eintreten kann;
die luftgekühlte Vorrichtung (32); und
das Rohr (40) zum Leiten des Luftstroms (37), der die von der luftgekühlten Vorrichtung (32) abgeführte Wärme transportiert.

9. Flugzeug nach Anspruch 8, wobei die luftgekühlte Vorrichtung (32) ein integriertes Gebläse (38) zum Antreiben des Abluftstroms umfasst.

10. Verfahren zum Leiten eines Luftstroms von einer luftgekühlten Vorrichtung (32) an Bord eines Flugzeugs (10), wobei das Verfahren umfasst:
das Leiten der Luft von der Vorrichtung weg mittels eines Rohres mit:
einer Einströmöffnung (42), die so konfiguriert ist, dass sie den Luftstrom aufnimmt, der die von der Vorrichtung abgeführte Wärme transportiert;
einer Ausströmöffnung (44), die so konfiguriert ist, dass sie einen Teil der an der Einströmöffnung empfangenen Luft zu einer Außenseite des Flugzeuges abgibt, und die so konfiguriert ist, dass ein freier Luftstrom (FS), der gegen eine Haut (18A) des Flugzeugs strömt, einen Strömungswiderstand an der Ausströmöffnung erzeugt; und
einer Öffnung (46), die durch ein Loch in einer Seitenwand des Kanals gebildet wird, wobei die Öffnung oberhalb der Ausströmöffnung angeordnet ist, wobei sowohl die Ausströmöffnung als auch die Öffnung gleichzeitig in flüssiger Kommunikation mit der Einströmöffnung stehen; und
das Abgeben der Luft, die mit dem Rohr von der Vorrichtung weg zu mindestens einer Außenseite des Flugzeuges und zu einem Inneren des Flugzeuges geleitet wird, wobei ein Teil der zur Außenseite des Flugzeuges und zur Innenseite des Flugzeugs abgegebenen Luft auf Basis des Strömungswiderstands an der Ausströmöffnung, der durch den gegen die Haut (18A) des Flugzeugs strömenden freien Luftstrom (FS) bereitgestellt wird, passiv ausgewechselt wird.

11. Verfahren nach Anspruch 10, umfassend das Leiten der Luft zumindest teilweise entlang eines linearen Weges zur Außenseite des Flugzeuges (10) und das Abgeben der Luft in einer Richtung quer zu dem linearen Weg in das Innere des Flugzeuges.

12. Verfahren nach Anspruch 11, umfassend das Abgeben der Luft im Wesentlichen entlang des linearen Weges zur Außenseite des Flugzeuges.

13. Verfahren nach einem der Ansprüche 10 bis 12, umfassend das Leiten der Luft zumindest teilweise entlang einer gekrümmten Bahn zur Außenseite des Flugzeuges (10) und das abgeben der Luft an einer konkaven Stelle der gekrümmten Bahn in das Innere des Flugzeuges.

## Revendications

1. Aéronef (10) comprenant un conduit (40) pour diriger un écoulement d'air (37) portant une chaleur extraite d'un dispositif refroidi à l'air (32) à bord de l'aéronef, le conduit comprenant :
une entrée (42) configurée pour recevoir l'écoulement d'air ;
une sortie d'échappement (44) configurée pour décharger une partie de l'air reçu à l'entrée à un extérieur de l'aéronef et configurée de sorte qu'un courant d'air libre (FS) s'écoulant contre un revêtement (18A) de l'aéronef fournisse une résistance à l'écoulement à la sortie d'échappement ; et
un orifice (46) formé par un trou dans une paroi latérale du conduit, l'orifice étant disposé en amont de la sortie d'échappement et configuré pour décharger une partie de l'air reçu à l'entrée à un intérieur de l'aéronef, à la fois la sortie d'échappement et l'orifice étant simultanément en communication fluidique avec l'entrée pour changer passivement une proportion d'air qui est déchargé à travers la sortie d'échappement et à travers l'orifice sur la base de la résistance à l'écoulement à la sortie d'échappement fournie par le courant d'air libre s'écoulant contre le revêtement de l'aéronef.

2. Aéronef selon la revendication 1, dans lequel l'orifice (46) est disposé plus près de la sortie d'échappement (44) que de l'entrée (42).

3. Aéronef selon l'une quelconque des revendications 1 et 2, dans lequel l'orifice (46) est disposé sur une portion sensiblement droite (48) du conduit.

4. Aéronef selon l'une quelconque des revendications 1 et 2, dans lequel le conduit présente une ligne médiane incurvée et l'orifice (46) est disposé sur un côté concave du conduit.

5. Aéronef selon l'une quelconque des revendications 1 à 4, dans lequel le conduit est configuré pour être installé de sorte qu'une portion du conduit adjacente à la sortie d'échappement (44) soit non-normale au revêtement (18A) de l'aéronef (10).

6. Aéronef selon l'une quelconque des revendications 1 à 5, le conduit comprenant une pluralité d'orifices (46) configurés pour décharger une partie de l'air reçu à l'entrée (42) à l'intérieur de l'aéronef (10).

7. Aéronef selon l'une quelconque des revendications 1 à 6, dans lequel l'entrée (42) comprend un carénage configuré pour s'adapter à une extrémité d'un moteur électrique (32).

8. Aéronef selon l'une quelconque des revendications 1 à 7 comprenant un compartiment d'équipements (12), le compartiment d'équipements comprenant :
une ouverture (34) formée dans un fuselage (18) de l'aéronef pour permettre à l'air ambiant provenant d'un extérieur de l'aéronef d'entrer dans le compartiment d'équipements ;
le dispositif refroidi à l'air (32) ; et
le conduit (40) pour diriger l'écoulement d'air (37) portant une chaleur extraite du dispositif refroidi à l'air (32).

9. Aéronef selon la revendication 8, dans lequel le dispositif refroidi à l'air (32) comprend un ventilateur intégré (38) pour entraîner l'écoulement d'air d'échappement.

10. Procédé pour diriger un écoulement d'air depuis un dispositif refroidi à l'air (32) à bord d'un aéronef (10), le procédé comprenant :
la direction de l'air à l'écart du dispositif au moyen d'un conduit comportant :
une entrée (42) configurée pour recevoir l'écoulement d'air portant une chaleur extraite du dispositif ;
une sortie d'échappement (44) configurée pour décharger une partie de l'air reçu à l'entrée à un extérieur de l'aéronef et configurée de sorte qu'un courant d'air libre (FS) s'écoulant contre un revêtement (18A) de l'aéronef fournisse une résistance à l'écoulement à la sortie d'échappement ; et
un orifice (46) formé par un trou dans une paroi latérale du conduit, l'orifice étant disposé en amont de la sortie d'échappement, à la fois la sortie d'échappement et l'orifice étant simultanément en communication fluidique avec l'entrée ; et
la décharge de l'air dirigé à l'écart du dispositif au moyen du conduit à au moins l'un parmi un extérieur de l'aéronef et un intérieur de l'aéronef où une proportion de l'air déchargé à l'extérieur de l'aéronef et à l'intérieur de l'aéronef est changée passivement sur la base de la résistance à l'écoulement à la sortie d'échappement fournie par le courant d'air libre (FS) s'écoulant contre le revêtement (18A) de l'aéronef.

11. Procédé selon la revendication 10, comprenant la direction de l'air vers l'extérieur de l'aéronef (10) au moins partiellement le long d'un trajet linéaire et la décharge de l'air à l'intérieur de l'aéronef dans une direction transversale au trajet linéaire.

12. Procédé selon la revendication 11, comprenant la décharge de l'air à l'extérieur de l'aéronef sensiblement le long du trajet linéaire.

13. Procédé selon l'une quelconque des revendications 10 à 12, comprenant la direction de l'air vers l'extérieur de l'aéronef (10) au moins partiellement le long d'un trajet incurvé et la décharge de l'air à l'intérieur de l'aéronef à un emplacement concave du trajet incurvé.
